# EUROPÄISCHE PATENTSCHRIFT

(11) **EP 2 650 160 B1**
(45) Veröffentlichungstag und Bekanntmachung des Hinweises auf die Patenterteilung: **31.12.2014**
(21) Anmeldenummer: 13405034.3
(22) Anmeldetag: 08.03.2013
(51) Int. Cl.: B60K 11/04, B60K 11/08, F16K 1/16

(54) **Jalousie für den Kühler eines Kraftfahrzeuges**
Blind for the cooler of a motor vehicle
Store pour le radiateur d'un véhicule automobile

(30) Priorität: 14.04.2012 CH 5132012
(43) Veröffentlichungstag der Anmeldung: 16.10.2013
(73) Patentinhaber: Kunststoff Schwanden AG, 8762 Schwanden (CH)
(72) Erfinder: Küsperth, Josef, CH-8762 Schwanden (CH)
(74) Vertreter: Quehl, Horst Max

(56) Entgegenhaltungen:
- DE-A1- 10 047 952
- DE-U1-202011 000 392

## Beschreibung

Jalousie für den Kühler eines Kraftfahrzeuges mit in einem kreisrunden Kanal eines Kühlerrahmens um ihre Längsachse schwenkbar gelagerten, radial angeordneten Lamellen, die zur Ausführung einer Schwenkbewegung zwischen einer offenen und geschlossenen Position der Jalousie im Bereich ihres radial äusseren Endes mit einem den Kanal umschliessenden Stellring gekoppelt sind, wobei der Stellring an einer Stelle seines Umfanges gelenkig mit einer Stellstange eines am Kühlerrahmen befestigten Stellantriebes gekoppelt ist.

Jalousien dieser Art sind beispielsweise bekannt durch die DE3905349, DE 4414893, EP1974974 und US7992664. Die dort vorgeschlagene Verwendung einer Unterdruckdose für einen Stellantrieb hat u.a. auch den Nachteil, dass neben den technischen Massnahmen, einschliesslich einer Unterdruckquelle und einer Unterdruckleitungen, der erforderliche Unterdruck nur bei laufendem Motor aufrechterhalten werden kann, so dass ein Öffnen der Jalousie bei fehlerhaftem Abstellen der Verbrennungskraftmaschine des Kraftfahrzeuges und ein Schliessen zur Speicherung der Wärme einer absichtlich abgestellten Verbrennungskraftmaschine nicht programmgemäss gesteuert werden kann. Auch ist es nachteilig, dass die Stellkraft einer Unterdruckdose von der Grösse ihres Durchmessers abhängig ist, so dass sie einen entsprechend grossen Einbauplatz am Rande der Jalousie bzw. am Kühlerrahmen benötigt.

Durch die gattungsbildende DE10047952 ist es weiterhin bekannt, die Bewegung des Stellringes einer Jalousie der eingangs genannten Art mittels eines kurzen, abgewinkelten, direkt auf den Stellring einwirkenden Hebelarmes eines Stellmotors zu steuern, indem dieser in eine Bohrung des Stellringes eingreift, um die Lamellen der Jalousie durch eine Viertelumdrehung von offener bis zur geschlossenen Position der Jalousie zu bewegen. Dieser Stellmotor muss zur Ausführung einer Ausgleichsbewegung verschiebbar gelagert sein und ist ausserdem mit einem Thermostaten gekoppelt.

Der Erfindung liegt die Aufgabe zugrunde eine Jalousie der eingangs genannten Art zu finden, deren Stellantrieb bei raumsparender Bauweise und Anordnung eine hohe Funktionssicherheit aufweist und der auf den Stellring hohe Stellkräfte ausüben kann. Ausserdem soll er auf herstellungsmässig einfache Weise an verschieden dimensionierte Jalousien und deren Kühlerrahmen anpassbar sein, so dass er auch ohne konstruktive Änderungen an diesen eine bisher übliche Unterdruck-Stelldose ersetzen kann.

Die Lösung der Aufgabe der Erfindung erfolgt dadurch, dass der Stellantrieb einen selbsthemmenden Getriebemotor aufweist, dessen Abtriebswelle mit einer Kurbel gekuppelt ist, deren der Abtriebswelle abgekehrtes Ende über ein Gelenk mit einer Stellstange verbunden ist, deren der Kurbel abgekehrtes Ende mit dem Stellring gekoppelt ist.

Im Folgenden wird die Erfindung anhand eines in den Zeichnungen dargestelltes Ausführungsbeispieles näher erläutert. Es zeigt:

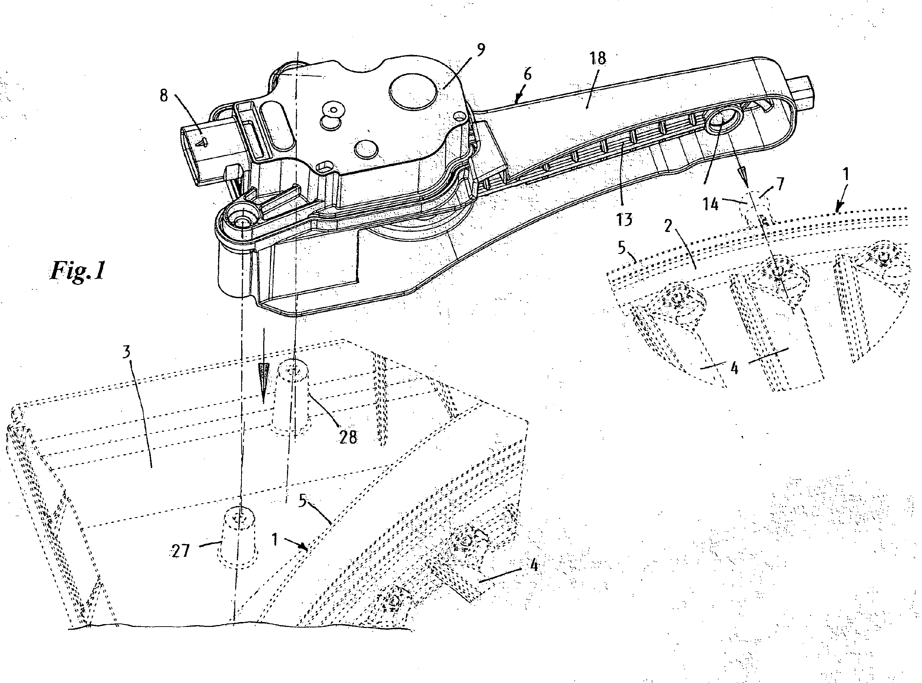

Fig.1 eine perspektivische Gesamtdarstellung des Stellantriebes mit durch Strichlinien angedeuteten, für seine Montage bestimmten Bereichen des Kühlerrahmens und der Jalousie und

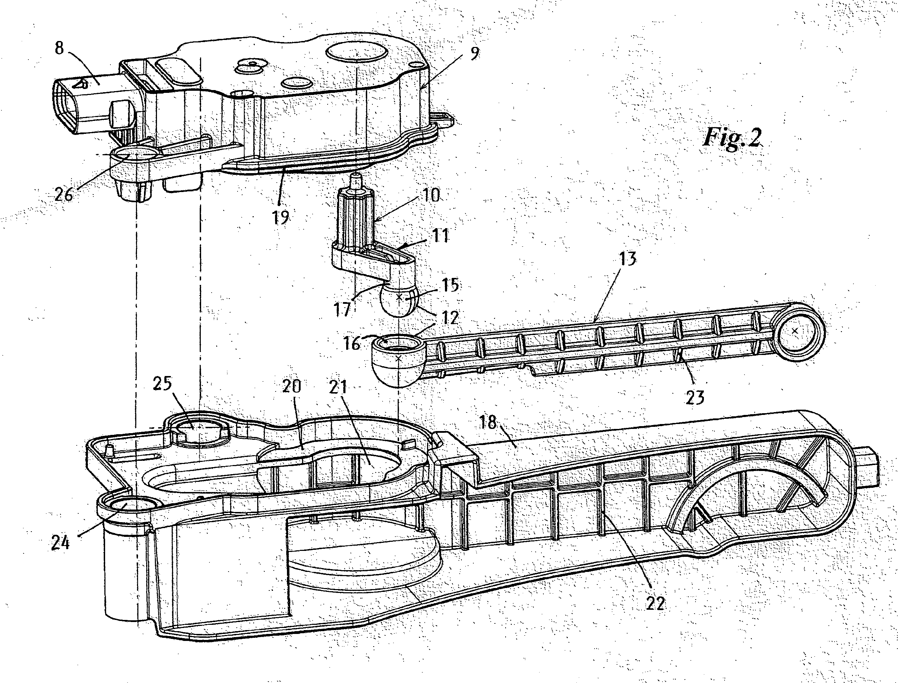

Fig.2 eine Explosionszeichnung des Stellantriebes mit Einzeldarstellung seines Stellmotors, seiner Kurbel, seiner Stellstange und eines Adaptergehäuses.

Die Kühlerjalousie 1 dient dem Öffnen und Schliessen eines kreisrunden, an den Kühler eines Kraftfahrzeuges angrenzenden Luftkanals 2, der innerhalb eines auch als Kühlerzarge bezeichneten Kühlerrahmens 3 vorgesehen ist. Hierzu umschliesst der Luftkanal 2 zahlreiche radial gerichtete, in ihm schwenkbar gelagerte Jalousielamellen 4.

Für die Ausführung einer dem Öffnen und Schliessen dienenden Schwenkbewegung der Lamellen 4 ist ein den Luftkanal 2 umschliessender, in seiner Umfangsrichtung verschiebbarer Stellring 5 vorgesehen.

Die Art der Einwirkung des Stellringes 5 auf die Lamellen 4 ist ebenso wie die gesamthafte Ausführung der Jalousie beispielsweise in der EP 1974974 näher beschrieben.

Für die Kopplung mit dem erfindungswesentlichen Antrieb 6 des Stellringes 5 der Jalousie ist am äusseren Umfang des Stellringes 5 ein Kopplungselement z.B. in Form eines Kopplungszapfens 7 befestigt oder angeformt.

Der Stellantrieb 6 hat einen über einen elektrischen Steckanschluss 8 versorgten Schrittmotor, der mit einer Reihe von nichtdargestellten Zahnrädern in einem gemeinsamen flachen Antriebsgehäuse 9 eingeschlossen ist, so dass seine mit der Kurbelwelle 10 einer Stellkurbel 11 gekuppelte Abtriebswelle ein hohes Drehmoment erhalten kann.

Die Verwendung eines Schrittmotors hat den Vorteil, dass er sich beim Start selbst kalibrieren kann, so dass keine Sensoren zur Erkennung der Stellposition und keine Arretierungen für die Endpositionen der Lamellen erforderlich sind. Ausserdem werden Fehlfunktionen erkannt, so dass die Lamellen der Jalousie 1 bei Fehlersituationen, z.B. bei Ausfall einer Kommunikation mit einem Steuergerät, in eine geöffnete Position bewegt werden. Durch seine selbsthemmenden Eigenschaften kann der Stellantrieb 6 für eine Temperaturregelung die Lamellen auch in einer Zwischenpositionen halten.

Die Übertragung der Stellbewegung von der Stellkurbel 11 auf den Stellring 5 der Jalousie erfolgt über ein an deren äusserem Ende vorgesehenes erstes Gelenk 12 auf eine Stellstange 13, deren diesem ersten Gelenk 12 abgekehrtes Ende über ein zweites, den Kopplungszapfen 7 aufweisendes Gelenk 14 mit dem Stellring 5 gekoppelt ist.

Vorzugsweise sind diese beiden Gelenke 12 und 14 als Kugelgelenk ausgeführt, so dass die in zwei zueinander senkrechten Ebenen erfolgende Bewegung der Stellstange, d.h. entsprechend der Schwenkbewegung der Stellkurbel 11 und der gekrümmten Bahn des Stellringes 5 ohne Biegeverformungen ausführbar ist. Dabei ist jeweils ein Kugelkopf 15 in einer Gelenkpfanne 16 eingerastet, und beide sind mit der Stellkurbel 11 bzw. der Stellstange 13 in Kunststoffspritztechnik einstückig ausgebildet.

Der Kugelkopf 15 des ersten Gelenkes ist vorzugsweise an einem der Kurbelwelle 10 der Stellkurbel 11 entgegengerichteten kurzen Zapfen 17 vorgesehen, so dass die Stellkurbel 11 zusammenwirkend mit der Stellstange 13 kniehebelartig eine ungehinderte Drehbewegung ausführen kann. Dabei kann zusätzlich zur Steuerung eines maximalen Stellweges über den Schrittmotor , z.B. entsprechend einer Kurbeldrehung von 180°, dieser auch durch am Kurbelstangengehäuse 18 vorgesehene Anschläge begrenzt werden.

Diese kniehebelartige Bewegung mit einer im Verhältnis zur Stellkurbel 11 mehrfach längeren Stellstange 13, im Verhältnis zu einer entsprechend dem maximalen Stellweg der Stellstange 13 relativen kurzen Stellkurbel 11, führt zu hohen Stellkräften, insbesondere in den beiden Extrempositionen der Jalousielamellen und einer relativ schnellen Stellbewegung in den Zwischenpositionen der Lamellendrehbewegung.

Die Länge der Stellstange 13 entspricht beispielsweise der 3- bis 6-fachen Länge der Stellkurbel 11, so dass sie sich angenähert tangential zum Umfang des Stellringes 5 erstreckt und mit optimal gerichteter Kraftkomponente auf den Stellring 5 einwirkt. Für eine optimale Positionierung des Stellantriebes 6 relativ zum Kopplungszapfen 7 des Stellringes 5 kann somit die Länge der Stellstange 13 einschliesslich eins zugehörigen Gehäuses 18 verschieden gewählt und den jeweiligen räumlichen Gegebenheiten angepasst werden.

Um die aus der Stellkurbel 11 und der Stellstange 13 mit ihren Kugelgelenken 12, 14 bestehende Stellmechanik der Jalousie vor Verschmutzung oder mechanischen Einwirkungen zu schützen und auch um eine Gefährdung durch sie bei Arbeiten im Motorraum des Fahrzeuges zu vermeiden, ist diese in einem zusätzlich zum Antriebsgehäuse 9 des Stellantriebes 6 vorgesehenen, langgestreckten, der Länge der Stellstange 13 angepassten Kurbelstangengehäuse 18 eingeschlossen, das sich entlang des Umfanges des Stellringes 5 erstreckt.

Für eine einfache Montage des Stellantriebs 6 angrenzend an den Umfang des Stellringes 5 ist zwischen dem Antriebsgehäuse 9 und dem Kurbelstangengehäuse 18 eine Flanschverbindung vorgesehen, deren aneinander liegenden Flansche 19, 20 eine Öffnung 21 umschliessen, durch die hindurch der Kugelkopf 15 der Stellkurbel 11 mit der Gelenkpfanne 16 der Stellstange 13 in Eingriff gebracht werden kann.

Für eine materialsparende Herstellung des langestreckten Kurbelstangengehäuses 18 und der Stellstange13 in Kunststoffspritztechnik haben diese in gitterartiger Anordnung zahlreiche Verstärkungsrippen.

Für eine steife Befestigung des Stellantriebes 6 am Kühlerrahmen 3, relativ zum drehbewegliche Stellring 5, erfolgt durch zwei nichtdargestellte Befestigungsschrauben, die sich durch Schraubenkanäle 24 , 25, 26 des Kurbelstangengehäuses 18 und des Stellantriebsgehäuses 9 hindurch erstecken und mit ihrem Gewinde in am Kühlerrahmen 3 angeformte Aufnahmezapfen 27, 28 eingreifen.

## Patentansprüche

1. Jalousie für den Kühler eines Kraftfahrzeuges mit in einem kreisrunden Kanal (2) eines Kühlerrahmens (3) um ihre Längsachse schwenkbar gelagerten, radial angeordneten Lamellen (4), die zur Ausführung einer Schwenkbewegung zwischen einer offenen und geschlossenen Position der Jalousie im Bereich ihres radial äusseren Endes mit einem den Kanal umschliessenden Stellring (5) gekoppelt sind, wobei der Stellring (5) an einer Stelle seines Umfanges gelenkig mit einer Stellstange (13) eines am Kühlerrahmen (3) befestigten Stellantriebes (6) gekoppelt ist, **dadurch gekennzeichnet, dass** der Stellantrieb (6) einen selbsthemmenden Getriebemotor aufweist, dessen Abtriebswelle (10) mit einer Stellkurbel (11) gekuppelt ist, deren der Abtriebswelle (10) abgekehrtes Ende über ein Gelenk (12) mit einer Stellstange (13) verbunden ist, deren der Stellkurbel (11) abgekehrtes Ende mit dem Stellring (5) gekoppelt ist.

2. Jalousie nach Anspruch 1, **dadurch gekennzeichnet, dass** die Stellstange (13) mehrfach länger ist als die Stellkurbel (11).

3. Jalousie nach Anspruch 1, **dadurch gekennzeichnet, dass** die Stellstange (13) eine drei- bis sechsfach grössere Länge hat als die Stellkurbel (11).

4. Jalousie nach einem der Ansprüche 1 bis 3, **dadurch gekennzeichnet, dass** die Stellstange (13) über ein Kugelgelenk (14) mit dem Stellring (5) verbunden ist.

5. Jalousie nach einem der Ansprüche 1 bis 4, **dadurch gekennzeichnet, dass** die Stellstange (13) über ein Kugelgelenk (12, 14) mit der Stellkurbel (11) verbunden ist.

6. Jalousie nach Anspruch 5, **dadurch gekennzeichnet, dass** der Kugelkopf (15) oder die Kugelpfanne des Kugelgelenkes (12) an einem von der Stellkurbel (11) wegragenden Kurbelzapfen (17) vorgesehen ist.

7. Jalousie nach einem der Ansprüche 1 bis 6, **dadurch gekennzeichnet, dass** zwischen einem Gehäuse (9) des Stellantriebes (6) und einem Kurbelstangengehäuse (18) eine Flanschverbindung vorgesehen ist, deren aneinander liegenden Flansche (19, 20) eine Öffnung (21) umschliessen, durch die hindurch sich die Stellkurbel (11) erstreckt.

8. Jalousie nach Anspruch 7, **dadurch gekennzeichnet, dass** Kurbelstangengehäuses (18) und das Stellantriebsgehäuse (9) zueinander gleichachsige Schraubenkanäle (24 -26) für die Aufnahme von im Kühlerrahmen (3) eingreifenden Befestigungsschrauben aufweisen.

9. Jalousie nach einem der Ansprüche 1 bis 8, **dadurch gekennzeichnet, dass** die Stellkurbel (11), die Stellstange (13) und ein Gehäuse (18) der Stellstange (13) im Spritzgiessverfahren aus Kunststoff geformt sind.

10. Jalousie nach Anspruch 9, **dadurch gekennzeichnet, dass** die Stellstange (13) und das Gehäuse (18) der Stellstange (13) in gitterartiger Anordnung zahlreiche Verstärkungsrippen (22, 23) aufweisen.

## Claims

1. Louver for a motor vehicle radiator with radially arranged fins (4), mounted in a circular channel (2) of a radiator frame (3) so they can be swiveled around their longitudinal axis, which are linked in the area of their radial outer ends with a set ring (5) surrounding the channel for the execution of a swiveling motion between an open and closed position of the louver, wherein the set ring (5) is articulated at one point on its circumference with a positioning rod (13) of a servo drive (6) that is fastened on a radiator frame (3), **characterized in that** the servo drive (6) has a self-locking gear motor, whose output shaft (10) is coupled with a control crank (11), of which the end that is turned away from the output shaft (10) is connected by way of a link (12) to a positioning rod (13), of which the end that is turned away from the control crank (11) is coupled with the set ring (5).

2. Louver according to Claim 1, **characterized in that** the positioning rod (13) is longer than the control crank (11) by a multiple of its length.

3. Louver according to Claim 1, **characterized in that** the positioning rod (13) has a length that is three to six times longer than the control crank (11).

4. Louver according to one of Claims 1 to 3, **characterized in that** the positioning rod (13) is connected with the set ring (5) by way of a ball joint (14).

5. Louver according to one of Claims 1 to 4, **characterized in that** the positioning rod (13) is connected to the control crank (11) by way of a ball joint (12, 14).

6. Louver according to Claim 5, **characterized in that** the ball head (15) or the socket of the ball head (12) is provided on a crank pin (17) extending away from the control crank (11).

7. Louver according to one of Claims 1 to 6, **characterized in that** between a housing (9) of the servo drive (6) and a crank rod housing (18), a flange connection is provided, the adjacent flanges (19, 20) of which surround an opening (21) through which the control crank (11) extends.

8. Louver according to Claim 7, **characterized in that** the crank rod housing (18) and the servo drive housing (9) have screw channels (24-26) that are coaxial with each other for holding fastening screw engaging in the radiator frame (3).

9. Louver according to one of Claims 1 to 8, **characterized in that** the control crank (11), the positioning rod (13) and a housing (18) of the positioning rod (13) are formed of plastic in the injection molding process.

10. Louver according to Claim 9, **characterized in that** the positioning rod (13) and the housing (18) of the positioning rod (13) have numerous reinforcement ribs (22, 23) in a grid-like arrangement.

## Revendications

1. Volet de radiateur d'un véhicule doté de lamelles (4) disposées radialement et montées de façon à pivoter autour de l'axe de la longueur dans un canal (2) circulaire du cadre du radiateur (3), lesquelles lamelles sont couplées à une bague de positionnement (5) entourant ledit canal afin de permettre un mouvement d'oscillation entre une position ouverte et une position fermée du volet dans la région de son extrémité externe, la bague de positionnement (5) étant couplée à la tige de réglage (13) d'un mécanisme de réglage (6) fixé sur le cadre du radiateur (3) articulé à un endroit de son périmètre, **caractérisé en ce que** le mécanisme de réglage (6) comporte un motoréducteur autobloquant dont l'arbre de sortie (10) est couplé à une manette de réglage (11) qui est reliée au moyen d'une tige de réglage (13) à l'extrémité opposée de l'arbre de sortie (10) par une articulation (12), tige de réglage dont l'extrémité opposée à la manette de réglage (11) est couplée à la bague de positionnement (5).

2. Volet selon la revendication 1, **caractérisé en ce que** la tige de réglage (13) est beaucoup plus longue que la manette de réglage (11).

3. Volet selon la revendication 1, **caractérisé en ce que** la tige de réglage (13) est trois à six fois plus longue que la manette de réglage (11).

4. Volet selon l'une quelconque des revendications 1 à 3, **caractérisé en ce que** la tige de réglage (13) est reliée à la bague de positionnement (5) au moyen d'un joint à bille (14).

5. Volet selon l'une quelconque des revendications 1 à 4, **caractérisé en ce que** la tige de réglage (13) est reliée à la manette de réglage (11) au moyen d'un joint à bille (12, 14).

6. Volet selon la revendication 5, **caractérisé en ce que** la poignée sphérique (15) ou le coussinet sphérique du joint à bille (12) est prévu au niveau d'un maneton (17) partant de la manette de réglage (11).

7. Volet selon l'une quelconque des revendications 1 à 6, **caractérisé en ce qu'**un raccord à bride est prévu entre un boîtier (9) du mécanisme de réglage (6) et un boîtier de manivelle (18), raccord dont les brides (19, 20) situées les unes sur les autres entourent une ouverture (21) à travers laquelle la manette de réglage (11) s'étend.

8. Volet selon la revendication 7, **caractérisé en ce que** le boîtier de manivelle (18) et le boîtier (9) du mécanisme de réglage comportent des canaux de vissage (24 - 26) coaxiaux qui permettent de recevoir des vis de fixation s'engrenant dans le cadre du radiateur (3).

9. Volet selon l'une quelconque des revendications 1 à 8, **caractérisé en ce que** la manette de réglage (11), la tige de réglage (13) et le boîtier (18) de la tige de réglage (13) sont fabriqués en plastique par moulage à injection.

10. Volet selon la revendication 9, **caractérisé en ce que** la tige de réglage (13) et le boîtier (18) de la tige de réglage (13) comportent plusieurs nervures de renforcement (22, 23) disposées sous forme de grille.
